# EUROPEAN PATENT APPLICATION

(11) **EP 3 952 502 A1**
(43) Date of publication of application: **09.02.2022**
(21) Application number: 19920947.9
(22) Date of filing: 28.03.2019
(51) Int. Cl.: H04W 72/04, H04W 28/20

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2019/013860
(87) International publication number: WO 2020/194741

(57) **Abstract**

An aspect of a user terminal of the present invention includes a receiving section that receives downlink control information from at least one of a plurality of transmission/reception points (TRPs) transmitting a downlink shared channel in a first bandwidth part (BWP) within a carrier, the control information including a certain field value indicating a second bandwidth part (BWP) within the carrier, and a control section that controls switching from the first BWP to the second BWP for the plurality of TRPs. This allows BWP switch to be appropriately implemented in a case where multi-TRP is used.

## Description

### Technical Field

The present invention relates to a user terminal and a radio communication method in next-generation mobile communication systems.

### Background Art

In Universal Mobile Telecommunications System (UMTS) networks, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (hereinafter referred to as NR), studies have been conducted about provision of one or more partial bands within a carrier (also referred to as a component carrier (CC), a cell, a serving cell, and so on) configured for user terminal (user equipment (UE)). The partial bands are also referred to as bandwidth parts (BWPs) and so on.

For the UE, studies have been conducted about control of activation or deactivation of the BWPs. An operation for switching an active BWP is also referred to as BWP switch or the like.

For NR, studies have been conducted about downlink (DL) or uplink (UL) communication performed by one or a plurality of transmission /reception points (TRPs) (multi-TRP) with a user terminal (User Equipment (UE)). However, the use of, multi-TRP may prevent appropriate implementation of the BWP switch.

Thus, an object of the present disclosure is to provide a user terminal and a radio communication method that enables the BWP switch to be appropriately implemented in a case where multi-TRP is used.

### Solution to Problem

An aspect of a user terminal of the present invention includes a receiving section that receives downlink control information from at least one of a plurality of transmission/reception points (TRPs) transmitting a downlink shared channel in a first bandwidth part (BWP) within a carrier, the control information including a certain field value indicating a second bandwidth part (BWP) within the carrier, and a control section that controls switching from the first BWP to the second BWP for the plurality of TRPs.

### Advantageous Effects of Invention

According to the present invention, BWP switch is appropriately implemented in a case where multi-TRP is used.

### Brief Description of Drawings

FIGS. 1A and 1B are diagrams to show examples of BWP switch;
FIGS. 2A to 2C are diagrams to show an example of a multi-TRP scenario;
FIG. 3 is a diagram to show an example of BWP switch according to a first mode of a first aspect;
FIGS. 4A and 4B are diagrams to show yet another example of the BWP switch according to the first mode of the first aspect;
FIGS. 5A and 5B are diagrams to show an example of DCI used for the BWP switch according to the first mode of the first aspect;
FIG. 6 is a diagram to show another example of the BWP switch according to the first mode of the first aspect;
FIG. 7 is a diagram to show an example of BWP switch according to a first mode of a second aspect;
FIG. 8 is a diagram to show an example of BWP switch according to a second mode of the second aspect;
FIG. 9 is a diagram to show an example of a schematic structure of a radio communication system according to one embodiment;
FIG. 10 is a diagram to show an example of a structure of a base station according to one embodiment;
FIG. 11 is a diagram to show an example of a structure of a user terminal according to one embodiment; and
FIG. 12 is a diagram to show an example of a hardware structure of the base station and the user terminal according to one embodiment.

### Description of Embodiments

### (BWP Switch)

For NR, studies have been conducted about configuration of one or more partial bands (bandwidth parts (BWPs)) within a carrier. In this regard, the carrier may be referred to as a cell, a serving cell, a component carrier (CC), and so on.

The BWP may include downlink (DL) BWPs and uplink (UL) BWPs (UL downlink control channel (Physical Downlink Control Channel (PDCCH)) BWPs). For one carrier, at least one of one or more DL BWPs and one or more UL BWPs may be configured.

In a case where a plurality of BWPs (for example, at least two of one or more DL BWPs and one or more UL BWPs) are configured in one carrier, activation or deactivation of some of the plurality of BWPs (for example, at least one of one DL BWP and one UL BWP) may be controlled.

For example, within one carrier, one DL BWP or one UL BWP may be activated. The activated DL BWP (active DL BWP) or the activated UL BWP (active UL BWP) may be switched.

An operation for switching the active DL BWP or the active UL BWP may be referred to as BWP switch, BWP switching, BWP change, and so on.

The BWP switch may be performed based on the value of a certain field (for example, a bandwidth part indicator (BI) field) within downlink control information (DCI) (this may also be referred to as DCI based BWP switch, a first mechanism, and so on). Alternatively, the BWP switch may be performed based on a certain timer (BWP-Inactivity Timer) (this may also be referred to as timer based BWP switch, a second mechanism, and so on).

The DCI may be DCI used for scheduling of a downlink shared channel (for example, Physical Downlink Shared Channel (PDSCH) (for example, DCI format 1_1), or DCI used for scheduling of an uplink shared channel (for example, Physical Uplink Shared Channel (PUSCH)) (for example, DCI format 0_1).

In a case where the DL BWP and the UL BWP are not particularly distinguished from each other, the generic term "BWP" is used. However, the BWP can be interpreted as the DL BWP or the UL BWP. Similarly, in a case where the active DL BWP and the active UL BWP are not particularly distinguished from each other, the generic term "active BWP" is used. However, the active BWP can be interpreted as the active DL BWP or the active UL BWP.

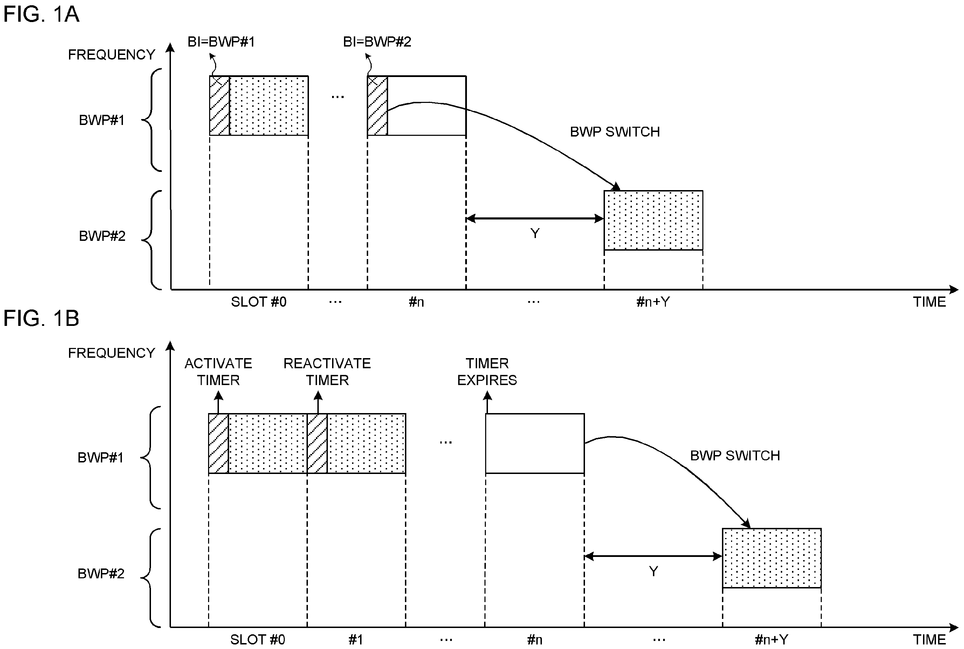

FIGS. 1A and 1B are diagrams to show an example of BWP switch. FIGS. 1A and 1B show an example in which an active BWP in a carrier is switched from BWP #1 to BWP #2.

Note that in FIGS. 1A and 1B, BWPs #1 and #2 are allocated in non-overlapping bands within the carrier but at least parts of BWPs #1 and #2 may be allocated in overlapping bands. FIGS. 1A and 1B show an example in which a time unit is a slot. However, the time unit is by no means limited to this. Two or more BWPs may be configured for the UE.

FIG. 1A shows an example of DCI based BWP switch. In the DCI based BWP switch, the UE monitors a certain search space set, and detects DCI transmitted via a downlink control channel (for example, Physical Downlink Control Channel (PDCCH)). The DCI may include information indicating a BWP to be activated (also referred to as a BWP identifier, a bandwidth part indicator (BI), a BI field value, a certain field value, and so on) The UE may control switching of the active BWP, based on the BI in the DCI.

For example, in FIG. 1A, the UE detects, in slot #0, DCI (for example, DCI format 1_1 or 0_1) including the BI indicating BWP #1 (current active BWP). In slot #0, the UE may control reception of the PDSCH or transmission of the PUSCH in BWP #1, based on the DCI.

On the other hand, the UE detects, in slot #n, DCI (for example, DCI format 1_1 or 0_1) including the BI indicating BWP #2 (current inactive BWP). The UE changes the active BWP from BWP #1 to BWP #2, based on the DCI. In slot #n+Y, the UE may control reception of the PDSCH or transmission of the PUSCH in BWP #2, based on the DCI.

Here, Y is a delay time required for the BWP switch. The delay time may be indicated by a certain number of time units (for example, a certain number of slots). The UE need not expect to detect DCI requesting the BWP switch at a slot offset from slot #n+Y in which the PDSCH is received or transmission of the PUSCH is transmitted, the slot offset being smaller than Y (in other words, need not expect to detect the DCI in slot #n+1 or later).

In FIG. 1B, in a case where the size of a certain field varies between DCI including the BI indicating BWP #1 and DCI including the BI indicating BWP #2, zero may be prepended to the certain field, or a least significant bit (LSB) may be utilized or a most significant bit (MSB) may be utilized.

FIG. 1B shows an example of timer based BWP switch. For a timer based BWP, a certain timer (for example, BWP-Inactivity Timer) is used to control switching of the active BWP to a certain BWP (referred to as a default BWP and so on). A default BWP may be configured for the UE by using a higher layer parameter (for example, defaultDownlinkBWP-Id or initialDownlinkBWP) or may be determined by the UE, based on a certain rule.

The timer may indicate a duration until the UE causes the active BWP to fall back (switch) to the default BWP. The timer (or duration) may be configured for the UE by using a higher layer parameter (for example, a Radio Resource Control (RRC) control element (Information Element (IE) "BWP-Inactivity Timer"). The duration may be indicated in units of milliseconds. Note that the RRC IE may be referred to as an RRC parameter.

As shown in FIG. 1B, in response to detection of DCI including cyclic redundancy check (CRC) scrambled with a certain radio network temporary identifier (RNTI), the UE may start or restart the timer.

The certain RNTI may be, for example, a cell(C)-RNTI or a configured scheduling (CS)-RNTI. The CRC scramble using the certain RNTI may refer to the inclusion, in (or the addition, to) the DCI of CRC bits scrambled (masked) with the certain RNTI.

When the timer is activated (or reactivated), the UE may decrement or reverse the timer at the end of a certain time unit (for example, a subframe for a frequency range (FR) 1 or a half subframe for a FR2). When the timer (or the value of the timer) becomes zero, the timer may expire. In response to detection of DCI before the timer expires, the UE reactivates the timer.

In response to expiry of the timer, the UE may perform BWP switch to the default BWP. Specifically, the UE may deactivate the active BWP and activate the default BWP.

For example, in FIG. 1B, in slot #0, the UE detects DCI CRC scrambled with the certain RNTI and thus activates the timer. The UE may control reception of the PDSCH or transmission of the PUSCH in BWP #1, based on the DCI.

The UE detects the DCI in slot #1 before the timer expires, and thus reactivates the timer. The UE does not detect the DCI from slot #1 until the timer expires, and may thus initiate the BWP switch in slot #n. Here, n may be a subframe (FR1) following the expiry of the timer or the beginning of a half subframe (FR2).

As shown in FIG. 1B, switching of the active BWP from BWP #1 to BWP #2 (default BWP) may occur no later than slot #n+Y. In slot #n+Y and later, the UE can receive the PDSCH or transmit the PUSCH in BWP #2. The UE is not requested to transmit a UL signal or receive a DL signal during a period Y.

### Multi-TRP

For NR, studies have been conducted about one or a plurality of transmission/reception points (TRPs) (multi-TRP) performing DL transmission (for example, PDSCH transmission) to the UE by using one or a plurality of panels (multi-panel).

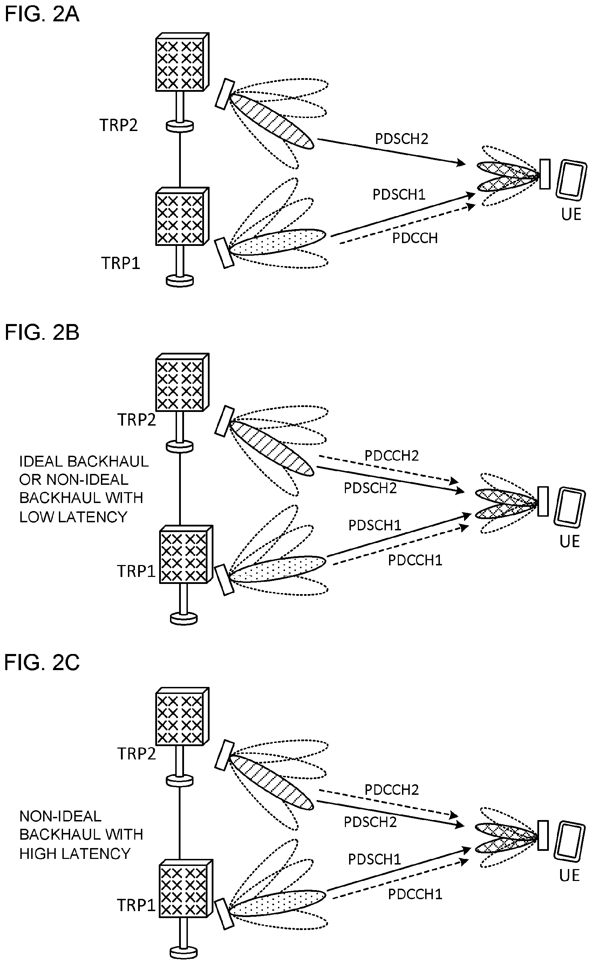

FIGS. 2A to 2C are diagrams to show an example of a multi-TRP scenario. FIGS. 2A to 2C assume that each TRP can transmit four different beams. However, this is not limiting. Note that FIGS. 2A to 2C assume that each TRP includes one panel, but one TRP may include a plurality of panels and reception of the PDSCH from each of the plurality of panels may be controlled by the PDCCH from a single or a plurality of panels.

FIG. 2A shows an example of a case in which only one TRP (in the present example, TRP 1) of the multi-TRP transmits the PDCCH to the UE and in which the multi-TRP transmits the PDSCH. For example, in FIG. 2A, the UE receives PDSCH 1 and PDSCH 2 respectively transmitted from TRPs 1 and 2, based on one PDCCH (DCI) from TRP 1.

As illustrated in FIG. 2A, scheduling of the PDSCH from a plurality of TRPs using the PDCCH (DCI) from a single TRP is also referred to as single DCI, single PDCCH, single master mode, PDCCH type A (first PDCCH type) or DMRS port group type A (first DMRS port group type), and so on. Note that although not illustrated, transmission of a plurality of PUSCHs to a plurality of TRPs which transmission is scheduled using DCI from a single TRP may also be referred to as described above.

FIGS. 2B and 2C show an example of a case in which the TRPs of the multi-TRP transmit separate PDCCHs to the UE and in which the TRPs of the multi-TRP transmit the respective PDSCHs. For example, in FIGS. 2B and 2C, the UE receives PDSCHs 1 and 2 respectively transmitted from TRPs 1 and 2, based on PDCCHs (DCI) 1 and 2 transmitted from TRPs 1 and 2.

As shown in FIGS. 2B and 2C, scheduling of PDSCHs from a plurality of TRPs using PDCCHs (DCI) from a plurality of TRPs is also referred to as multi (multiple) DCI, multi-PDCCH, multi-master mode, and so on. Note that although not illustrated, transmission of a plurality of PUSCHs to a plurality of TRPs which transmission is scheduled using DCI from a plurality of TRPs may also be referred to as described above.

In the multi-PDCCH, as shown in FIG. 2B, the plurality of TRPs (for example, TRPs 1 and 2) may be connected by an ideal backhaul or by a non-ideal backhaul with low latency. The scenario shown in FIG. 2B is also referred to as PDCCH type B (second PDCCH type) or DMRS port group type B (second DMRS port group type), and so on.

Alternatively, in the multi-PDCCH, as shown in FIG. 2C, the plurality of TRPs (for example, TRPs 1 and 2) may be connected by a non-ideal backhaul with large latency. The scenario shown in FIG. 2B is also referred to as PDCCH type C (third PDCCH type) or DMRS port group type C (second DMRS port group type), and so on.

For the multi-TRP scenario as described above, studies have been conducted about non-coherent transmission of DL signals (for example, PDSCHs) from a plurality of respective TRPs or transmission of UL signals (for example, PUSCHs) to the plurality of TRPs. Non-coherent transmission of the DL signal or the UL signal in a joint manner is also referred to as NCJT (Non-Coherent Joint Transmission).

For example, in NCJT, between the plurality of TRPs and the UE, an identical codeword (CW) may be transmitted by using different layers, or different CWs may be transmitted. Note that the CW may be referred to as a transport block (TB) and so on.

A plurality of PDSCHs or a plurality of PUSCHs subjected to NCJT may be assumed not to be in a quasi-co-location (QCL) relationship (not quasi-co-located). A plurality of PDSCHs or a plurality of PUSCHs subjected to NCJT may be defined to overlap partially or completely in connection with at least one of a time domain and a frequency domain.

In the multi-TRP scenario as described above, the problem is how to control the BWP switch. Specifically, for the multi-PDCCH (for example, FIG. 2B or 2C), the problem is how to control the DCI based BWP switch or the timer based BWP switch.

Thus, the inventors of the present invention studied a method for appropriately implementing at least one of DCI based BWP switch (first aspect) and timer based BWP switch (second aspect) in multi-PDCCH, and came up with the present invention.

An embodiment according to the present disclosure will be described in detail with reference to the drawings as follows. Note that the aspects of the present embodiment may be employed independently or may be employed in combination.

Note that, in the present embodiment, the following and the like may be interpreted as one another: a TRP, a panel, an Uplink (UL) transmission entity, an antenna port of a demodulation reference signal (DMRS) (DMRS port), a group of DMRS ports (DMRS port group), a group of DMRS ports multiplexed by code division multiplexing (CDM) (CDM group), an antenna port group, a group related to reference signals (RSs) (RS related group), a control resource set (CORESET), a search space set, a PDSCH, a codeword, and a base station.

The ideal backhaul or non-ideal backhaul may be identified by or interpreted as a certain type (for example, type A or type B) of the DMRS port group, the RS related group, or the antenna port group.

A panel identifier (ID) and a panel may be interpreted as each other. A TRP ID and a TRP may be interpreted as each other. A cell ID and a cell (serving cell) may be interpreted as each other. An ID, an index, and a number may be interpreted as one another. A cell may be interpreted as a serving cell, a carrier, a CC, and so on. Expect and assume may be interpreted as each other.

The use of the multi-PDCCH (for example, see FIGS. 2B and 2C) will be described below. However, this is not limiting. For example, control of the BWP switch based on a particular TRP of a plurality of TRPs (for example, one TRP) can also be appropriately applied to the use of a single PDCCH (see, for example, FIG. 2A).

In the description below, a plurality of TRPs may be connected by an ideal backhaul or by a non-ideal backhaul.

### (First Aspect)

In a first aspect, the DCI based BWP switch in the multi-PDCCH will be described. The DCI based BWP switch may be configured for the UE by using a higher layer parameter (for example, an RRC parameter). In the DCI based BWP switch, one or a plurality of operation modes (for example, at least one of first to third modes) may be supported.

### <First Mode>

In the first mode, a plurality of pieces of DCI including respective BIs indicating BWPs different from the current active BWP may be transmitted from a plurality of TRPs. The UE may expect to receive a plurality of pieces of DCI including the respective BIs from the plurality of TRPs.

In the first mode, the UE need not to expect to (simultaneously) receive a plurality of pieces of DCI including respective BIs indicating different BWPs, from a plurality of TRPs in an identical time unit (for example, a slot or a symbol). In other words, the UE may expect to receive a plurality of BWPs including the respective BIs indicating an identical BWP, from a plurality of TRPs in an identical time unit.

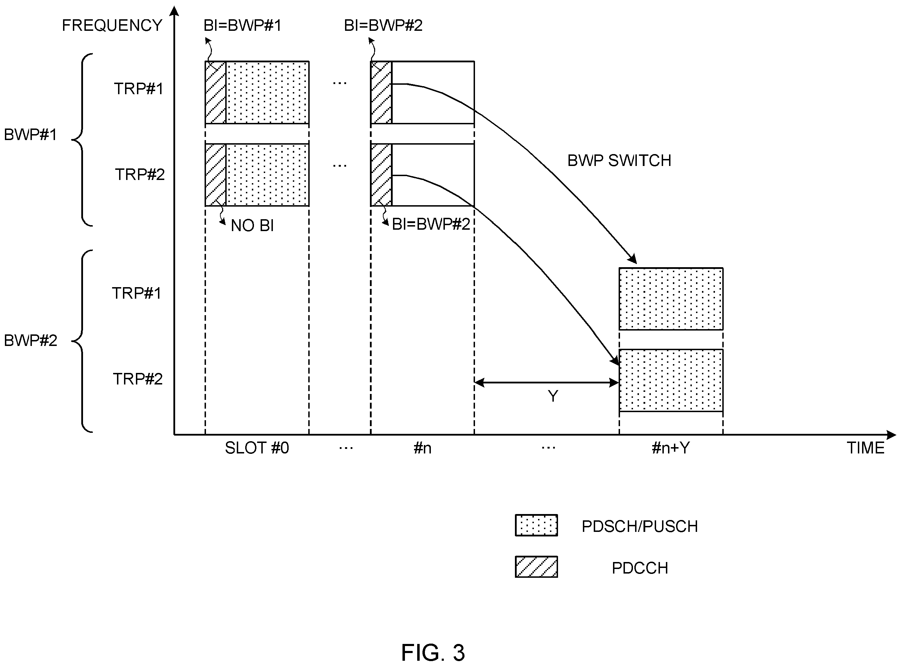

FIG. 3 is a diagram to show an example of the BWP switch according to the first mode of the first aspect. FIG. 3 shows an example of the DCI based BWP switch in the multi-PDCCH (see FIG. 2B or 2C). For example, in FIG. 3, the active BWP changes from BWP #1 to BWP #2.

For example, in FIG. 3, the UE receives a plurality of pieces of DCI including the respective BIs indicating identical BWP #2, from TRPs #1 and #2 in identical slot #n. As described above, the UE need not expect that a plurality of pieces of DCI from each of TRPs #1 and #2 received in an identical slot include BIs indicating different BWPs.

In slot #n in FIG. 3, the UE may control switching of the active BWP, based on the BI in the DCI transmitted from one of TRPs #1 and #2. Specifically, the UE may switch the active BWP to BWP #2 before slot #n+Y. Note that the period Y has been described with reference to FIG. 1A.

In slot #n+Y in FIG. 3, the UE may control reception of the PDSCH or transmission of the PUSCH at TRP #1 in BWP #2, based on the DCI from TRP#1 detected in slot #n. The UE may control reception of the PDSCH or transmission of the PUSCH at TRP #2 in BWP #2, based on the DCI from TRP #2 detected in slot #n.

Note that the UE may expect to receive DCI including BIs and DCI including no BIs, from TRPs #1 and #2 in an identical slot (for example, slot #0 in FIG. 3).

In the first mode, in response to reception of a plurality of pieces of DCI including the respective BIs indicating different BWPs, from a plurality of TRPs in an identical time unit (for example, a slot or a symbol), the UE may switch the active BWP, based on the BI in the DCI from one TRP of the plurality of TRPs.

The UE may determine the one TRP of the plurality of TRPs in accordance with a certain rule. For example, the certain rule may indicate that the TRP includes, for example, the lowest or highest index among the plurality of TRPs. Alternatively, the one TRP may be configured for the UE by using a higher layer parameter (for example, an RRC IE or Medium Access Control (MAC) control element (CE)).

The UE may ignore the BIs in the DCI from the other TRPs of the plurality of TRPs or may assume that no BI is present (not present) within the DCI.

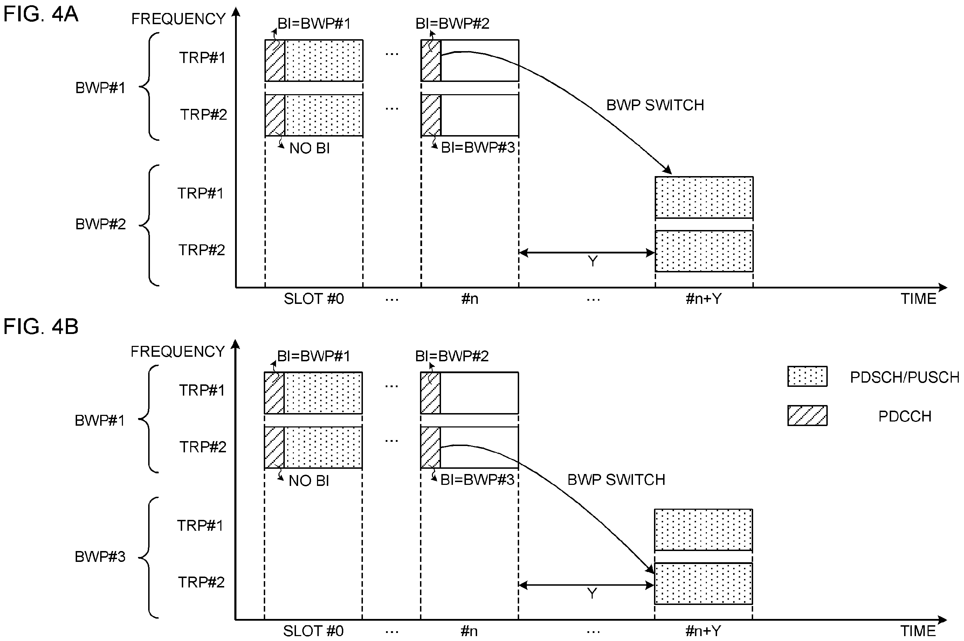

FIGS. 4A and 4B are diagrams to show yet another example of the BWP switch according to the first mode of the first aspect. Note that with reference to FIGS. 4A and 4B, differences from FIG. 3 will be mainly described. FIGS. 4A and 4B differ from FIG. 3 in that the UE receives a plurality of pieces of DCI including respective BIs indicating different BWPs #2 and #3 instead of an identical BWP, from TRPs #1 and #2 in identical slot #n.

For example, in slot #n in FIG. 4A, the UE selects TRP #1 with the lowest index from TRP #1 and TRP #2. Based on the BI (in this case, indicating BWP #2) in the DCI from TRP #1 selected, the UE may switch the active BWP from BWP #1 to BWP #2 before slot #n+Y, for both TRPs #1 and #2.

On the other hand, in slot #n in FIG. 4B, the UE selects TRP #2 with the highest index from TRP #1 and TRP #2. Based on the BI (in this case, indicating BWP #3) in the DCI from TRP #2 selected, the UE may switch the active BWP from BWP #1 to BWP #3 before slot #n+Y, for both TRPs #1 and #2.

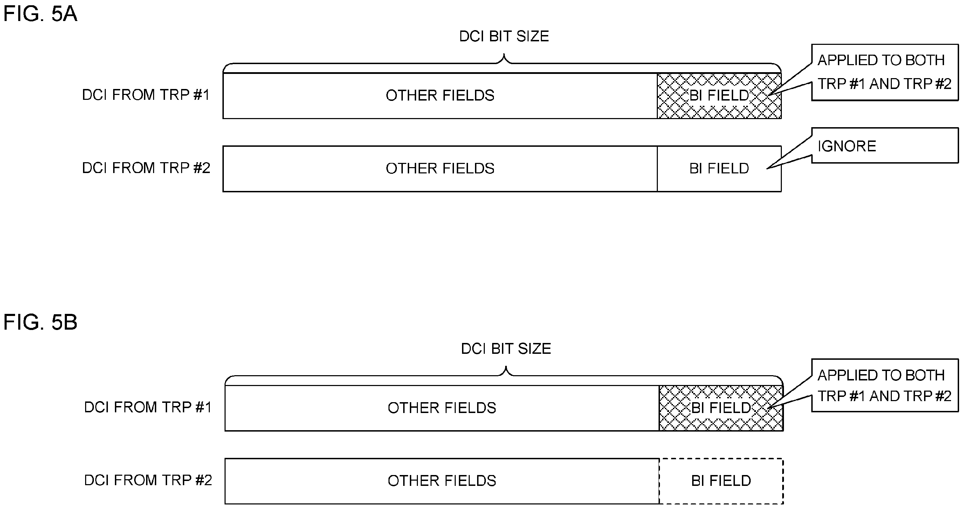

In slot #n in FIGS. 4A and 4B, the UE may ignore the BI in the DCI from the TRP unselected (TRP #2 in FIG. 5A or TRP #1 in FIG. 5B).

FIGS. 5A and 5B are diagrams to show an example of DCI used for the BWP switch according to the first mode of the first aspect. FIGS. 5A and 5B illustrate two pieces of DCI received from different TRPs #1 and #2 in slot #n, for example, as described with reference to FIGS. 4A and 4B.

As shown in FIG. 5A, the UE may assume that a BI field is present in each of two pieces of DCI transmitted from TRPs #1 and #2. In this case, the two pieces of DCI may have an identical bit size (payload).

For example, in FIG. 5A, based on the BI in the DCI from TRAP #1 selected in accordance with a certain rule (in this case, having the lowest index), the UE may control switching of the active BWPs for both TRPs #1 and #2. On the other hand, the UE may ignore the BI in the DCI from TRP #2.

Note that in FIG. 5A, the BI in the DCI from TRP #2 may be used for another application. The other application may be at least one of, for example, time domain resource assignment, frequency domain resource assignment, downlink assignment index (DAI), and the like.

On the other hand, as shown in FIG. 5B, the UE may assume that the BI field is present in the DCI of TRP #1 selected from TRPs #1 and #2 in accordance with the certain rule, whereas the BI field is not present in the DCI from other TRP #2. In this case, the two pieces of DCI may have different bit sizes. For example, in FIG. 5B, the DCI from TRP #1 may include x bits, whereas the DCI from TRP #2 may include x - p bits. Here, p is the number of bits in the BI field.

In FIGS. 5A and 5B, two pieces of DCI from TRPs #1 and #2 may be associated with different CORESETs (may be detected by monitoring a plurality of search space sets associated with different CORESETs). In this case, the UE can recognize the TRP having transmitted the DCI, based on the CORESET associated with the DCI (associated with the search space set in which the DCI has been detected).

Alternatively, in FIGS. 5A and 5B, two pieces of DCI may be associated with an identical CORESET (may be detected by monitoring one or a plurality of search space sets associated with an identical CORESET). In this case, the UE can recognize, by a certain field value in each piece of DCI, the TRP having transmitted the DCI. Alternatively, the UE may recognize the TRP having transmitted the DCI, based on the search space set or the configuration information (for example, the RRC IE "PDCCH-Config")) in which the DCI is detected.

### <Second Mode>

In a second mode, DCI including the BI indicating a BWP different from the current active BWP may be transmitted from a particular TRP (for example, one TRP) of the plurality of TRPs. The UE may expect to receive the DCI including the BI from a particular TRP of the plurality of TRPs. The UE need not expect to receive the DCI including the BI from the other TRPs of the plurality of TRPs.

The particular TRP may be configured for the UE by using a higher layer parameter (for example, an RRC IE) or may be determined by the UE in accordance with a certain rule (for example, the TRP has the lowest or highest index). Alternatively, the UE may determine, in accordance with a certain rule, the TRP from among a plurality of candidates for the TRP configured for the UE by using a higher layer parameter.

One piece of DCI transmitted from the particular TRP configured or determined as described above may include the BI. Alternatively, a plurality of pieces of DCI transmitted from a plurality of respective TRPs may include BIs, or the UE may control the BWP switch, based on the BI in the DCI from the particular TRP of the plurality of TRPs.

In a case of transmitting DCI including the BI indicating a BWP different from the current active BWP (determining to perform the BWP switch), the particular TRP may notify the other TRPs that the BWP switch is to be performed.

The notification may be provided via the ideal backhaul or the non-ideal backhaul or via X2 signaling or Xn signaling. This may allow the consistency of the active BWP among the TRPs to be made sure.

Note that in the description above, one TRP determined from a plurality of TRPs determines the BWP switch but this is not limiting. Each of the plurality of TRPs may determine the BWP switch. In this case, each determination result may be adjusted via a certain interface (for example, x2 or Xn) between the plurality of TRPs, and DCI including the BI indicating the determined BWP may be transmitted from at least one of the plurality of TRPs.

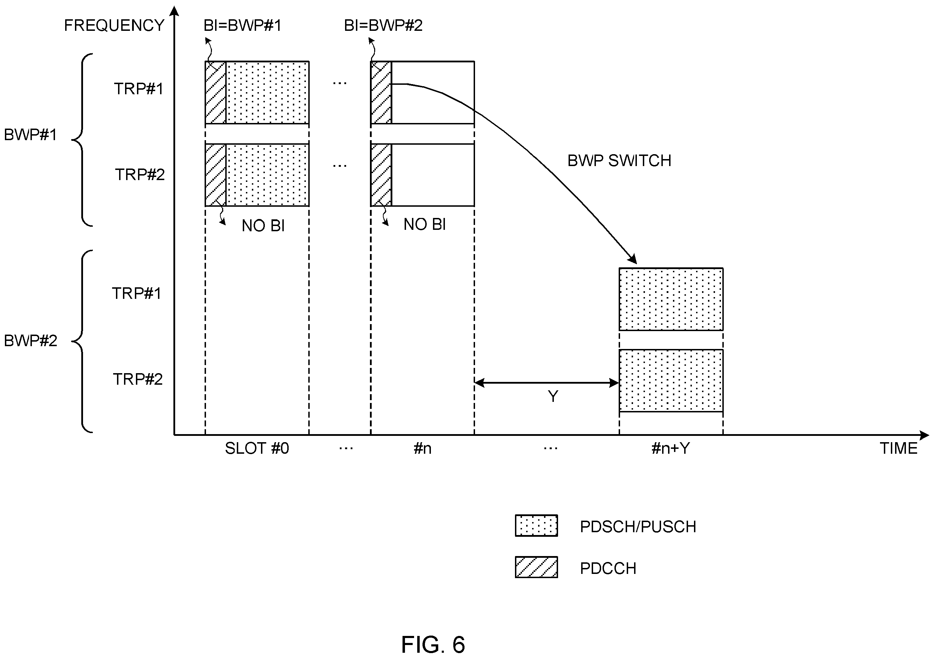

FIG. 6 is a diagram to show another example of the BWP switch according to the first mode of the first aspect. Note that with reference to FIG. 6, differences from FIG. 3 will be mainly described.

For example, in FIG. 6, the UE receives DCI including the BI indicating BWP #2 different from BWP #1 used as the current active BWP, from a particular TRP (in this case, TRP #1) in slot #n. On the other hand, the UE may receive DCI including no BI from the other TRP (in this case, TRP #2).

As shown in FIG. 6, the UE may control change of the active BWP based on the BI in the DCI transmitted from TRP #1. Specifically, based on the BI, the UE may switch the active BWP from BWP #1 to BWP #2 before slot #n+Y, for both TRPs #1 and #2.

In slot #n+Y in FIG. 6, the UE may control reception of the PDSCH or transmission of the PUSCH at TRP #1 in BWP #2, based on the DCI from TRP#1 detected in slot #n. The UE may control reception of the PDSCH or transmission of the PUSCH at TRP #2 in BWP #2, based on the DCI from TRP #2 detected in slot #n.

Note that two pieces of DCI transmitted from TRPs #1 and #2 in slot #n in FIG. 6 may have different DCI formats or different sizes (payloads). For example, the DCI transmitted from TRP #1 and including the BI may have DCI format 1_1 or 0_1, and the DCI from which TRP #2 is transmitted and which includes the BI may have DCI format 1_0 or 0_0.

### <Third Mode>

In a third mode, the DCI based BWP switch in the multi-PDCCH need not be supported. Alternatively, in a case where the multi-PDCCH is configured for the UE, the DCI based BWP switch need not be configured for the UE.

In the third mode, each serving cell (carrier) configured for the UE need not be configured with a BWP. Alternatively, the UE need not be configured with reception or transmission in any BWP, based on a higher layer parameter (for example, an RRC IE "BWP-Downlink" or "BWP-Uplink") within the serving cell.

In a case where a set of a certain number of BWPs (for example, up to four DL BWPs or up to four UL BWPs) are configured based on the higher layer parameter (for example, the RRC IE "BWP-Downlink" or "BWP-Uplink"), even with a BI present in the DCI (for example, DCI format 1_1 or 0_1), the UE may ignore the BI.

In the third mode, the UE may determine the active BWP semi-statically. For example, the active BWP may be configured for the UE, based on system information (for example, SIB1), a higher layer parameter that is common within the cell (for example, "initialDownlinkBWP" in an RRC IE "DownlinkConfigCommon"), or a UE-specific higher layer parameter (for example, "BWP-Downlink" in an RRC IE "ServingCellConfig").

The active BWP may follow an RRC configuration or an RRC reconfiguration. The UE may be configured with the active BWP semi-statically by using an RRC parameter.

In a case where a plurality of BWPs are configured for the UE, one of the plurality of BWPs may be configured as the active BWP for the UE by using an RRC parameter or a MAC CE. Alternatively, the UE may determine the active BWP from among the plurality of BWPs in accordance with a certain rule (for example, the lowest or largest BWP index).

### <Control of Support/Operation Mode>

Whether the DCI based BWP switch is supported or not may be explicitly or implicitly indicated to the UE. With the explicit indication, the UE may receive information indicating whether to support the DCI based BWP switch (BWP switch information), and determine, based on the information, whether to support the DCI based BWP switch.

For example, in a case where the BWP switch information indicates the support of the DCI based BWP switch (for example, on), the UE may determine that the DCI based BWP switch is to be supported. On the other hand, in a case where the BWP switch information indicates the support of the DCI based BWP switch (for example, off), the UE may determine that the DCI based BWP switch is not to be supported even in a case where a plurality of BWPs are configured within the serving cell.

On the other hand, with the implicit indication, the UE may determine whether to support the DCI based BWP switch, based on at least one of the number of BWPs configured within the serving cell, a connection type between a plurality of TRPs (for example, the ideal backhaul or the non-ideal backhaul), the type of delay, the type of the PDCCH (also referred to as, for example, single PDCCH or multi-PDCCH, scheduling type, and so on), and the type of the DMRS port group.

For example, when a plurality of BWPs are configured within the serving cell, the UE may determine that the DCI based BWP switch is to be supported. On the other hand, in a case where a plurality of BWPs are not configured within the serving cell (only one BWP is configured within the serving cell or a single active BWP identical to or different from an initial BWP is present within the serving cell), the UE may determine that the DCI based BWP switch is not to be supported.

In the DCI based BWP switch, one of the first to third modes may be supported. For example, in response to the determination that the DCI based BWP switch is to be supported, the UE may operate in one of the first and second modes supported.

Alternatively, at least two of the first to third modes may be supported, and an operation mode for the DCI based BWP switch may be determined by using a higher layer parameter. The operation mode may be indicated explicitly or implicitly to the UE.

With the explicit indication, the UE may receive information indicating the operation mode for the DCI based BWP switch (operation mode information) and operate in the operation mode indicated by the information.

On the other hand, with the implicit indication, the UE may determine the operation mode, based on at least one of the number of BWPs configured within the serving cell, the connection type between a plurality of TRPs (for example, the ideal backhaul or the non-ideal backhaul), the type of delay, the type of the PDCCH (also referred to as, for example, single PDCCH or multi-PDCCH, scheduling type, and so on), and the type of the DMRS port group.

As described above, in the first aspect, the DCI based BWP switch in the multi-PDCCH can be appropriately controlled.

### (Second Aspect)

In a second aspect, the timer based BWP switch in the multi-PDCCH will be described. The timer based BWP switch may be configured for the UE by using the higher layer parameter (for example, the RRC parameter). In the timer based BWP switch, one or a plurality of operation modes (for example, at least one of first to third modes) may be supported.

### <First Mode>

In the first mode, switching of the active BWP is controlled based on timers for a plurality of respective TRPs.

### <<Timer Value Common to TRPs>>

The UE may be configured with a value of a timer for each cell by using a higher layer parameter (for example, an RRC IE "bwp-InactivityTimer"). The value of the timer may be common to the TRPs within the cell.

The UE may control switching of the active BWP, based on the timer value common to the TRPs. Specifically, the UE may control, for each TRP in the cell, activation or reactivation of the timer with the value common to the TRPs The UE may switch the active BWP to the default BWP in a case where one of a plurality of TRPs expires.

The UE may activate or reactivate the timer in a case where a certain condition is satisfied for each TRP. The timer may be associated with the active BWP. The certain condition for activating or reactivating the timer for each TRP may be, for example, one of the following.
- DCI (PDCCH) CRC scrambled with a certain RNTI (for example, a C-RNTI or CS-RNTI) is detected in the active BWP.
- A MAC protocol data unit (MAC PDU) is transmitted or received by using configured grant (configured UL grant) or configured DL assignment (semi-persistent scheduling (SPS)) (in other words, data is transmitted or received without dynamic grant).

### <<Timer Value for Each TRP>>

Alternatively, the UE may be configured with the value of the timer for each of the TRPs by using the higher layer parameter. The value of the timer may be independently (dedicatedly, specifically) provided for each of the TRPs within the cell.

The UE may control switching of the active BWP in accordance with a timer value configured for a certain TRP (for example, TRP with the lowest or highest index) Specifically, the UE may control activation or reactivation of the timer with the timer value for each of the TRPs within the cell. Note that the condition for activating or reactivating the timer for each TRP may be similar to the condition in the case of the use of the timer value common to the TRPs. In a case where the timer for one of the plurality of TRPs expires, the UE may switch the active BWP to the default BWP.

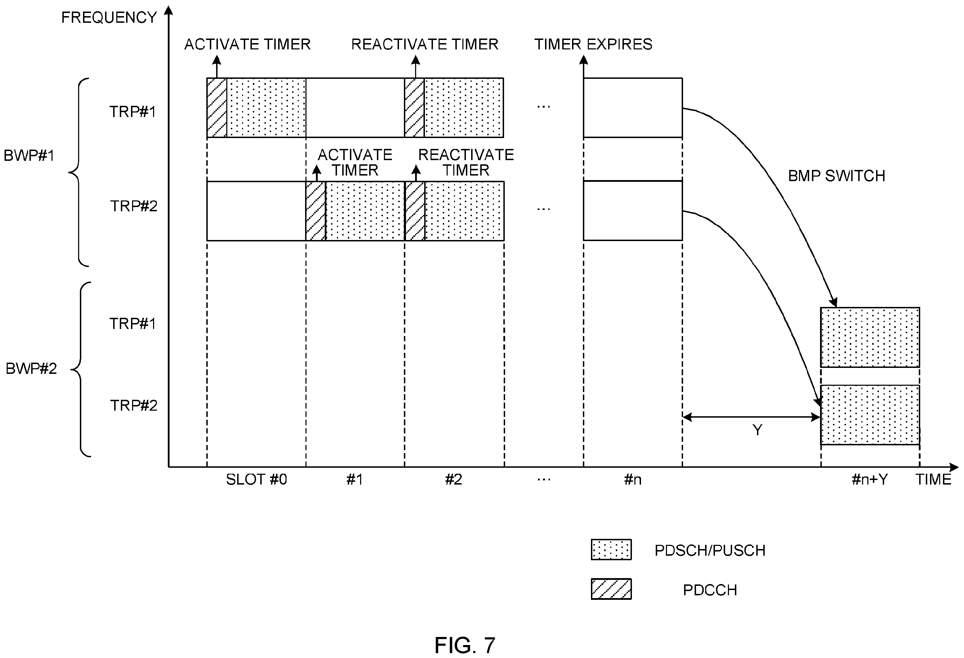

FIG. 7 is a diagram to show an example of the BWP switch according to a first mode of a second aspect. FIG. 7 shows an example of a timer based BWP switch in the multi-PDCCH (see FIG. 2B or 2C). For example, in FIG. 7, the active BWP changes from BWP #1 to BWP #2.

In FIG. 7, the timer value may be configured on a cell basis (common to the TRPs) or on a TRP basis (for each TRP). The DCI detected in FIG. 7 is assumed to be CRC scrambled with a certain RNTI (for example, a C-RNTI or CS-RNTI).

For example, in FIG. 7, in slot #0, the UE detects DCI (PDCCH) transmitted from TRP #1, and thus activates the above-described timer for TRP #1. In slot #1, the UE detects DCI (PDCCH) transmitted from TRP #2, and thus activates the above-described timer for TRP #2. In slot #2, the UE detects pieces of DCI (PDCCHs) transmitted from TRPs #1 and #2, and thus activates the above-described timers for the respective TRPs #1 and #2.

Note that the UE may recognize the TRP transmitting the DCI, based on the CORESET associated with the DCI (CORESET associated with the search space set in which the DCI is detected) or may recognize the TRP, based on a certain field value in the DCI. Alternatively, the UE may recognize the TRP having transmitted the DCI, based on the search space set or the configuration information (for example, the RRC IE "PDCCH-Config") in which the DCI is detected.

In FIG. 7, the timers reactivated by TRPs #1 and #2 in slot #2 expire in slot #n-1. Thus, in slot #n, the UE may initiate switching of the active BWP from BWP #1 to BWP #2. In slot #n+Y, the UE may receive the PDSCH or transmit the PUSCH in BWP #2 or later. As described above with reference to FIG. 1B, the UE need not be requested to transmit a UL signal or receive a DL signal during the period Y.

In FIG. 7, the timers for respective TRPs #1 and #2 expire in the identical time unit (in this case, slot #n-1). However, the active BWP may be switched in a case where one of the timers for TRP #1 or #2 expires.

### <Second Mode>

In a second mode, switching of the active BWP is controlled based on a particular TRP (for example, one TRP) of the plurality of TRPs.

The UE may expect that the active BWP is switched in a case where the timer activated by the particular TRP of the plurality of TRPs expires. The UE need not expect that the active BWP is switched even in a case where the timer activated by another TRP of the plurality of TRPs expires.

In the second mode, the timer value may be configured on a cell basis (common to the TRPs) or on a TRP basis.

The particular TRP may be configured for the UE by using a higher layer parameter (for example, an RRC control element) or may be determined by the UE in accordance with a certain rule (having the lowest or highest index). Alternatively, the UE may determine, in accordance with a certain rule, one TRP from among a plurality of candidates for the TRP configured for the UE by using a higher layer parameter.

The BWP switch may be controlled based on the timer activated by the particular TRP configured or determined as described above. Note that in the other TRPs, the above-described timer may be activated in a case where the above-described certain condition is satisfied but the BWP switch need not be performed even in a case where the timer expires.

In response to expiry of the timer (determination that the BWP switch is to be performed), the particular TRP may notify the other TRPs that the BWP switch is to be performed. The notification may be provided via the ideal backhaul or the non-ideal backhaul or via X2 signaling or Xn signaling. This may allow the consistency of the active BWP among the TRPs to be made sure.

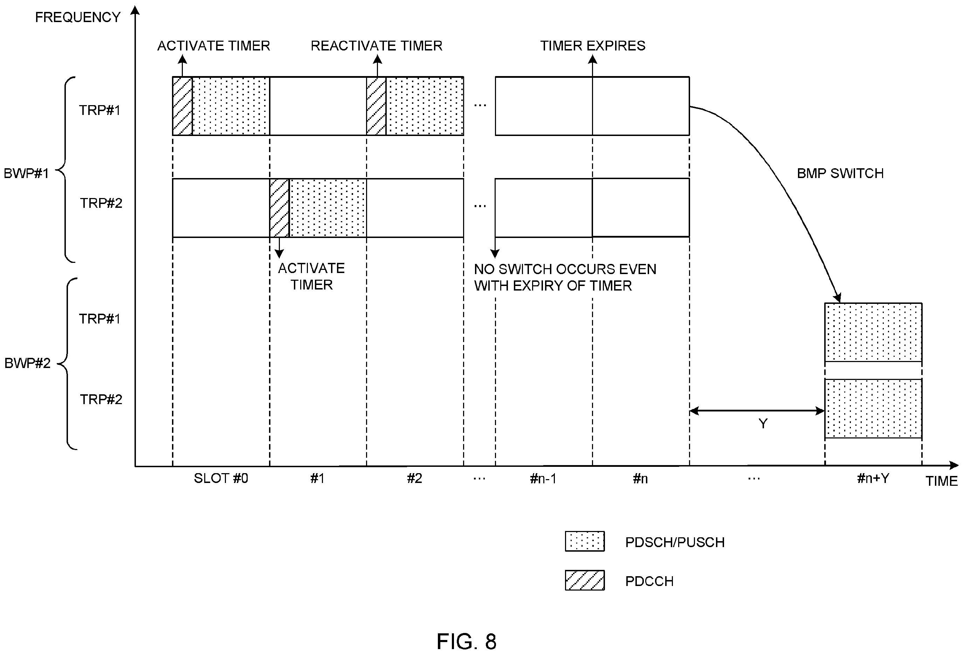

FIG. 8 is a diagram to show an example of the BWP switch according to the second mode of the second aspect. Note that with reference to FIG. 8, differences from FIG. 7 will be mainly described. In FIG. 8, a particular timer for one of TRPs #1 and #2 (in this case, TRP #1) is assumed to be configured or determined as a TRP controlling the BWP switch.

For example, in FIG. 8, in slot #0, the UE detects DCI (PDCCH) transmitted from TRP #1, and thus activates the above-described timer for TRP #1. In slot #1, the UE detects DCI (PDCCH) transmitted from TRP #2, and thus activates the above-described timer for TRP #2. In slot #2, the UE detects DCI (PDCCH) transmitted from TRP #1, and thus activates the above-described timer for TRP #1.

In FIG. 8, the timer activated by TRP #2 in slot #n-2 expires. TRP #2 is a timer other than the above-described particular timer, and thus the BWP switch is not implemented.

On the other hand, the timer activated by particular TRP #1 in slot #n-1 expires. Thus, in slot #n, the UE may initiate switching of the active BWP from BWP #1 to BWP #2. In slot #n+Y, the UE may receive the PDSCH or transmit the PUSCH in BWP #2 or later. As described above with reference to FIG. 1B, the UE need not be requested to transmit a UL signal or receive a DL signal during the period Y.

Note that in FIG. 8, the timer in TRP #2, which is not the particular TRP, is also activated but the timer for TRP #2 need not be activated.

In the second mode, the BWP switch is controlled based on the expiry of the timer in the particular TRP, and thus the expiry of timers in the plurality of TRPs need not be monitored. Consequently, control related to the BWP switch can be simplified.

### <Third Mode>

In a third mode, the timer based BWP switch in the multi-PDCCH need not be supported. Alternatively, in a case where the multi-PDCCH is configured for the UE, the timer based BWP switch need not be configured for the UE.

In the third mode, each serving cell (carrier) configured for the UE need not be configured with a BWP. Alternatively, the UE need not be configured with reception or transmission in any BWP, based on a higher layer parameter (for example, an RRC IE "BWP-Downlink" or "BWP-Uplink") within the serving cell.

In a case where a set of a certain number of BWPs (for example, up to four DL BWPs or up to four UL BWPs) are configured based on the higher layer parameter (for example, the RRC IE "BWP-Downlink" or "BWP-Uplink"), even with a BI present in the DCI (for example, DCI format 1_1 or 0_1), the UE may ignore the BI.

In the third mode, the UE may determine the active BWP semi-statically. For example, the active BWP may be configured for the UE, based on system information (for example, SIB1), a higher layer parameter that is common within the cell (for example, "initialDownlinkBWP" in an RRC IE "DownlinkConfigCommon"), or a UE-specific higher layer parameter (for example, "BWP-Downlink" in an RRC IE "ServingCellConfig").

The active BWP may follow an RRC configuration or an RRC reconfiguration. The UE may be configured with the active BWP semi-statically by using an RRC parameter.

In a case where a plurality of BWPs are configured for the UE, one of the plurality of BWPs may be configured as the active BWP for the UE by using an RRC parameter or a MAC CE. Alternatively, the UE may determine the active BWP from among the plurality of BWPs in accordance with a certain rule (for example, the lowest or largest BWP index).

### <Control of Support/Operation Mode>

Whether the timer based BWP switch is supported or not may be explicitly or implicitly indicated to the UE. With the explicit indication, the UE may receive information indicating whether to support the timer based BWP switch (BWP switch information), and determine, based on the information, whether to support the timer based BWP switch.

For example, in a case where the BWP switch information indicates the support of the timer based BWP switch (for example, on), the UE may determine that the timer based BWP switch is to be supported. On the other hand, in a case where the BWP switch information indicates the support of the timer based BWP switch (for example, off), the UE may determine that the timer based BWP switch is not to be supported even in a case where a plurality of BWPs are configured within the serving cell.

On the other hand, with the implicit indication, the UE may determine whether to support the timer based BWP switch, based on at least one of the number of BWPs configured within the serving cell, the connection type between a plurality of TRPs (for example, the ideal backhaul or the non-ideal backhaul), the type of delay, the type of the PDCCH (also referred to as, for example, single PDCCH or multi-PDCCH, scheduling type, and so on), and the type of the DMRS port group.

For example, when a plurality of BWPs are configured within the serving cell, the UE may determine that the timer based BWP switch is to be supported. On the other hand, in a case where a plurality of BWPs are not configured within the serving cell (only one BWP is configured within the serving cell or a single active BWP identical to or different from the initial BWP is present within the serving cell), the UE may determine that the timer based BWP switch is not to be supported.

In the timer based BWP switch, one of the first to third modes may be supported. For example, in response to the determination that the timer based BWP switch is to be supported, the UE may operate in one of the first and second modes supported.

Alternatively, at least two of the first to third modes may be supported, and an operation mode for the timer based BWP switch may be determined by using a higher layer parameter. The operation mode may be indicated explicitly or implicitly to the

### UE.

With the explicit indication, the UE may receive information indicating the operation mode for the timer based BWP switch (operation mode information) and operate in the operation mode indicated by the information.

On the other hand, with the implicit indication, the UE may determine the operation mode, based on at least one of the number of BWPs configured within the serving cell, the connection type between a plurality of TRPs (for example, the ideal backhaul or the non-ideal backhaul), the type of delay, the type of the PDCCH (also referred to as, for example, single PDCCH or multi-PDCCH, scheduling type, and so on), and the type of the DMRS port group.

As described above, in the second aspect, the timer based BWP switch in the multi-PDCCH can be appropriately controlled.

### (Other Aspects)

The UE may support at least one of the DCI based BWP switch according to the first aspect and the timer based BWP switch according to the second aspect. The UE may be explicitly or implicitly notified of which type of BWP switch is supported.

With the explicit indication, the UE may receive information indicating the type of the BWP switch (for example, the DCI based BWP switch or the timer based BWP switch) and operate in the operation mode indicated by the information.

On the other hand, with the implicit indication, the UE may determine the type of the BWP switch, based on at least one of the number of BWPs configured within the serving cell, the connection type between a plurality of TRPs (for example, the ideal backhaul or the non-ideal backhaul), the type of delay, the type of the PDCCH (also referred to as, for example, single PDCCH or multi-PDCCH, scheduling type, and so on), and the type of the DMRS port group.

The first mode of the first or second aspect may be suitable for the ideal backhaul. In the multi-TRP with connection by the ideal backhaul, the BWP switch in the first mode may be used.

The second or third mode of the first or second aspect may be suitable for the non-ideal backhaul or an ideal backhaul with large latency. In the multi-TRP with connection by the non-ideal backhaul or the ideal backhaul with large latency, the BWP switch in the second or third mode may be used.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

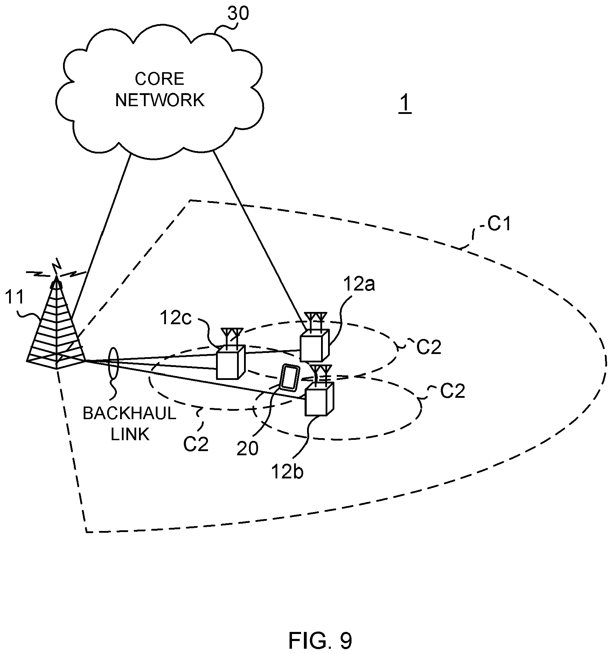

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in an identical RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

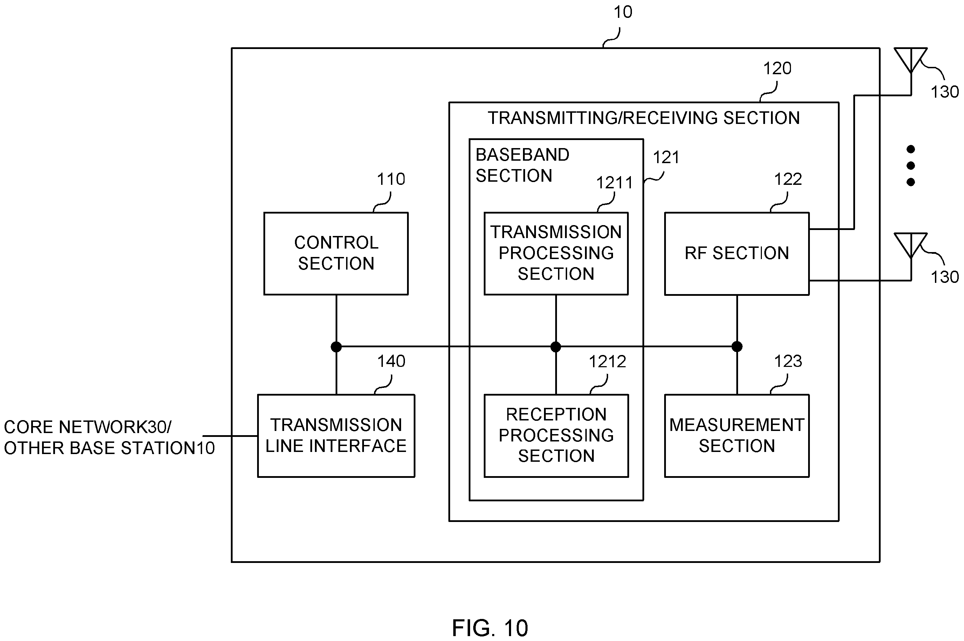

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit downlink control information from at least one of a plurality of transmission/reception points (TRPs) transmitting a downlink shared channel in a first bandwidth part (BWP) within the carrier.

The downlink control information may include a certain field value indicating a second bandwidth part (BWP) within the carrier (first aspect). The control section 110 may control switching from the first BWP to the second BWP for the plurality of TRPs.

The control section 110 may control determination of the BWP switch in each of the plurality of TRPs or in a particular TRP. For example, the control section 110 may control transmission and reception of information related to the BWP switch, between the plurality of TRPs.

### (User Terminal)

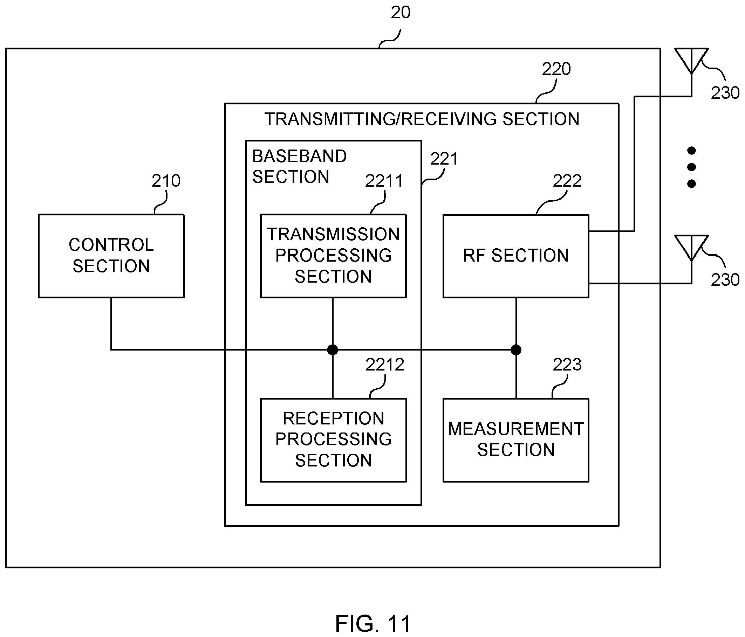

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 may receive downlink control information from at least one of a plurality of transmission/reception points (TRPs) transmitting a downlink shared channel in a first bandwidth part (BWP) within the carrier.

The downlink control information may include a certain field value indicating a second bandwidth part (BWP) within the carrier (first aspect). The control section 210 may control switching from the first BWP to the second BWP for the plurality of TRPs.

In a case of receiving the downlink control information from each of the plurality of TRPs within an identical slot, the control section 210 need not expect that the second BWP indicated by the certain field value varies among the plurality of TRPs (first aspect, first mode).

The control section 210 may control switching from the first BWP to the second BWP for the plurality of TRPs, based on the downlink control information received from a particular TRP of the plurality of TRPs (first aspect, second mode).

The control section 210 may configure the active BWP semi-statically without supporting the DCI based BWP switch and (first aspect, third mode).

Note that the transmitting/receiving section 220 may receive downlink control information from at least one of a plurality of transmission/reception points (TRPs) transmitting a downlink shared channel in a first bandwidth part (BWP) within the carrier.

Based on a certain timer activated by reception of the downlink control information, the control section 210 may control switching from the first BWP to the second BWP for the plurality of TRPs (second aspect).

In response to expiry of the certain timer activated by any TRP of the plurality of TRPs, the control section 210 may control switching from the first BWP to the second BWP for the plurality of TRPs (second aspect, first mode).

In response to expiry of the certain timer activated by a particular TRP of the plurality of TRPs, the control section 210 may control switching from the first BWP to the second BWP for the plurality of TRPs (second aspect, second mode).

The control section 210 may configure the active BWP semi-statically without supporting the timer based BWP switch (second aspect, third mode).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, functional block (components) to implement a function of transmission may be referred to as a "transmitting section (transmitting unit)," a "transmitter," and the like. The method for implementing each component is not particularly limited as described above.

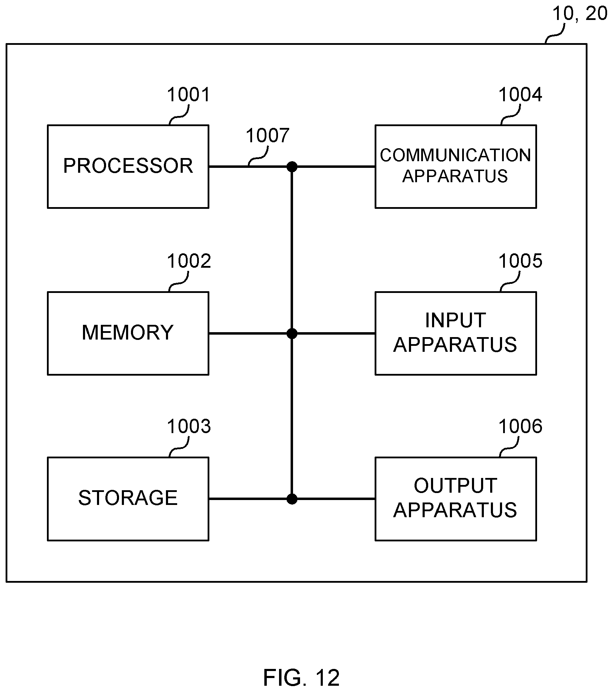

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives downlink control information from at least one of a plurality of transmission/reception points (TRPs) transmitting a downlink shared channel in a first bandwidth part (BWP) within a carrier, the control information including a certain field value indicating a second bandwidth part (BWP) within the carrier; and
a control section that controls switching from the first BWP to the second BWP for the plurality of TRPs.

2. The user terminal according to claim 1, wherein
in a case of receiving the downlink control information from each of the plurality of TRPs within an identical slot, the control section does not expect that the second BWP indicated by the certain field value varies among the plurality of TRPs.

3. The user terminal according to claim 1, wherein
the receiving section controls switching from the first BWP to the second BWP for the plurality of TRPs, based on the downlink control information received from a particular TRP of the plurality of TRPs.

4. A user terminal comprising:
a receiving section that receives downlink control information from at least one of a plurality of transmission/reception points (TRPs) transmitting a downlink shared channel in a first bandwidth part (BWP) within a carrier; and
a control section that controls switching from the first BWP to the second BWP for a plurality of TRPs, based on a certain timer activated by reception of the downlink control information.

5. The user terminal according to claim 4, wherein
in response to expiry of the certain timer activated by any TRP of the plurality of TRPs or expiry of the certain timer activated by a particular TRP of the plurality of TRPs, the control section controls switching from the first BWP to the second BWP for the plurality of TRPs.

6. A radio communication method for a user terminal, the radio communication method comprising:
receiving downlink control information from at least one of a plurality of transmission/reception points (TRPs) transmitting a downlink shared channel in a first bandwidth part (BWP) within a carrier, the control information including a certain field value indicating a second bandwidth part (BWP) within the carrier; and
controlling switching from the first BWP to the second BWP for the plurality of TRPs.
